# EUROPÄISCHE PATENTSCHRIFT

(11) **EP 3 260 306 B1**
(45) Veröffentlichungstag und Bekanntmachung des Hinweises auf die Patenterteilung: **06.05.2020**
(21) Anmeldenummer: 17163188.0
(22) Anmeldetag: 28.03.2017
(51) Int. Cl.: B60C 11/03, B60C 11/11, B60C 11/13

(54) **NUTZFAHRZEUGREIFEN MIT EINEM LAUFSTREIFEN MIT EINEM STOLLENPROFIL**
COMMERCIAL VEHICLE TYRE WITH A TREAD STRIP WITH A TREAD BAR
PNEU DE VÉHICULE UTILITAIRE COMPRENANT UNE SURFACE DE ROULEMENT À PROFIL À DENTURE

(30) Priorität: 22.06.2016 DE 102016211109
(43) Veröffentlichungstag der Anmeldung: 27.12.2017
(73) Patentinhaber: Continental Reifen Deutschland GmbH, 30165 Hannover (DE)
(72) Erfinder: Krieger, Ralf, 30559 Hannover (DE); Emde, Andreas, 30938 Burgwedel (DE)
(74) Vertreter: Finger, Karsten

(56) Entgegenhaltungen:
- EP-B1- 1 172 234
- WO-A1-2012/087272
- JP-A- 2002 046 424
- US-A- 5 411 067
- US-A1- 2003 136 487
- US-A1- 2009 084 478

## Beschreibung

Die Erfindung betrifft einen Nutzfahrzeugreifen in Radialbauart, insbesondere Landwirtschaftsreifen, mit einem Laufstreifen mit einem Stollenprofil, bei welchem die Stollen in zwei gegeneinander in Umfangsrichtung versetzten Stollenreihen angeordnet sind, wobei jeder Stollen von zwei in der Richtung der Längserstreckung des Stollens verlaufenden Randkanten, ferner von einer diese laufstreifenrandseitig und einer diese im Bereich der Laufstreifenmitte verbindenden Randkante umlaufen ist, wobei diese Randkanten die einzigen Randkanten der Stollen sind und wobei die Stollen jeweils eine durchgehende Oberfläche aufweisen, welche durchgehend von den Randkanten umlaufen ist.

Nutzfahrzeugreifen mit Stollenprofilen sind schon seit Langem bekannt und üblich und werden insbesondere auf Ackerschleppern und sonstigen landwirtschaftlich genutzten Maschinen als Traktionsreifen eingesetzt. Landwirtschaftsreifen mit Stollenprofilen sind auch immer wieder Gegenstand von Patentanmeldungen.

Ein Nutzfahrzeugreifen der eingangs genannten Art, welcher ein Traktorreifen ist, ist beispielsweise aus der US 4 534 392 bekannt. In jeder Stollenreihe sind in Umfangsrichtung abwechselnd bis in den Bereich des Reifenäquators verlaufende und vor dem Reifenäquator endende Stollen vorgesehen. Aus der US 5 411 067 ist ebenfalls ein Nutzfahrzeugreifen mit unterschiedlich langen Stollen bekannt, wobei die längeren Stollen bis zum Reifenäquator verlaufen und mittig jeweils mit einer den jeweiligen Stollen zwischen seinen Randkanten durchquerenden Vertiefung versehen sind.

Aus der EP 1 172 234 B1 ist ein Landwirtschaftsreifen mit einem Stollenprofil bekannt, bei welchem in jedem Stollen eine vom Bereich des Stollenkopfes bis zum Laufstreifenrand durchgehend verlaufende Rille ausgebildet ist, welche den ansonsten massiven Stollen teilt, sodass solche Reifen für den Einsatz auf befestigten Straßen besser geeignet sind. Aus der EP 0 126 476 B1 ist ein Landwirtschaftsreifen mit einem Stollenprofil mit zwei Stollenreihen bekannt, bei welchem die seitlichen Flankenflächen der Stollen unterschiedlich gestaltet sind. Die in Bezug auf die Laufrichtung des Reifens vordere Flankenfläche ist mit einem speziellen Krümmungsverlauf ausgebildet, um gute Griffeigenschaften zu erzielen und einen unregelmäßigen Abrieb zu reduzieren.

Aus der WO 2012 087 272 A1 ist ferner ein Nutzfahrzeugreifen mit einem Laufstreifen mit einem Blockprofil bekannt, bei welchem einige Blöcke im Bereich des Schwerpunktes ihrer Deckfläche jeweils eine radial ins Innere des Blockes hineinragende Vertiefung mit einer Tiefe von zumindest 25% der Höhe des Blockes aufweisen. Insbesondere sind die Vertiefungen derart lokal begrenzt ausgebildet, dass in Draufsicht auf die Blöcke die Fläche der Vertiefungen 5% bis 25 % der Fläche der Blöcke entspricht. Diese Vertiefungen sollen eine "Kühlwirkung" erzeugen, wodurch der Nutzfahrzeugreifen für das Fahren mit höherer Geschwindigkeit besser geeignet sein soll.

Aus der US 2003/0136487 A1 ist darüber hinaus ein Nutzfahrzeugreifen mit einem Laufstreifen mit einem Blockprofil bzw. mit Profilbändern bekannt. An der Oberfläche der Blöcke bzw. Bänder sind angrenzend an den Randkanten kuppelartige Erhebungen ausgebildet.

Ferner ist aus der US 2009/0084478 A1 ein Reifen für eine Bewässerungs-/ Sprühvorrichtung bekannt, welcher ein Stollenprofil aufweist, dessen Stollen eine von zwei Randkanten umlaufene breite Randfläche aufweisen, wobei in der Mitte der Stollen Vertiefungen vorgesehen sind.

Nutzfahrzeugreifen, die für den on- und offroad-Einsatz geeignet sein sollen, weisen oft ein Blockprofil auf. Reifen mit derartigen Blockprofilen eignen sich besonders für den Einsatz auf unbefestigten Straßen und überhaupt auf unbefestigtem Untergrund und daher beispielsweise auf Baustellenfahrzeugen oder Fahrzeugen im Einsatz für die Forstwirtschaft.

Bei den aus dem Stand der Technik bekannten Nutzfahrzeugreifen mit Stollenprofilen oder ausgeprägten Blockprofilen ist die äußere Oberfläche der Stollen bzw. Blöcke, die Flächen zwischen den umlaufenden Kanten, entsprechend der Außenkontur des Reifens nach außen gewölbt. Beim Abrollen des Reifens treten Scherspannungen zwischen den Stollen- oder Blockoberflächen und der Fahrbahn auf, die je nach lokaler Anpresskraft und auch je nach Flexibilität des Stollens oder Blockes ein Gleiten und somit einen verstärkten Abrieb zur Folge haben. Das vorherrschende Abriebsbild bei Nutzfahrzeugreifen mit derartigen Traktionsprofilen zeigt daher einen ausgeprägten Kantenabrieb, welcher auch einen insgesamt ungleichmäßigen Abrieb zur Folge haben kann, der die Lebensdauer und Haltbarkeit solcher Reifen beeinträchtigt.

Der Erfindung liegt die Aufgabe zu Grunde, einen ungleichmäßigen Abrieb zu vermeiden und damit die Haltbarkeit und Lebensdauer von Reifen der eingangs genannten Art zu verbessern.

Gelöst wird die gestellte Aufgabe erfindungsgemäß durch einen Nutzfahrzeugreifen nach Anspruch 1.

Durch die erfindungsgemäße Wölbung der Oberflächen der Stollen oder Blöcke nach innen wird der Anpressdruck der Stollen bzw. Blöcke zum Untergrund an den Kanten erhöht und im mittleren Bereich der Stollen bzw. Blöcke hingegen abgesenkt. Diese Maßnahme hat daher ein geringeres Gleiten im Bereich der Kanten und ein größeres Gleiten im Bereich der Stollen- bzw. Blockmitte zur Folge. Der sonst übliche progressive Abrieb an den Randkanten wird verzögert bzw. verhindert. Der Abrieb der Stollen bzw. Blöcke insgesamt wird somit wesentlich gleichmäßiger und der Reifen bleibt länger nutzbar. Die Wölbung sollte daher weder zu tief noch zu seicht ausgeführt sein, um einen gleichmäßigeren Abrieb des Laufstreifens und einen geringeren Abrieb im Bereich der Randkanten zu erzielen. Für einen besonders gleichmäßigen Abrieb ist es vorteilhaft, wenn die Wölbungen der Oberflächen im Wesentlichen symmetrisch zu den in der Längserstreckung verlaufenden Mittellinien der Oberflächen der Stollen ausgebildet sind und wenn die Wölbungen über ihre Erstreckung entlang der Stollen eine im Wesentlichen konstante Rundung aufweisen.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Umfangsabschnitt einer erfindungsgemäßen Ausführungsform eines Laufstreifens eines Reifens für landwirtschaftlich genutzte Fahrzeuge,
Fig. 2 eine Schnittansicht eines Stollens gemäß der Linie II-II der Fig. 1,
Fig. 3 eine Draufsicht auf einen Umfangsabschnitt einer Ausführungsform eines Laufstreifens eines für on- und offroad-Einsatz geeigneten Nutzfahrzeugreifens und
Fig. 4 eine Schnittansicht eines Blockes gemäß der Linie III-III der Fig. 3.

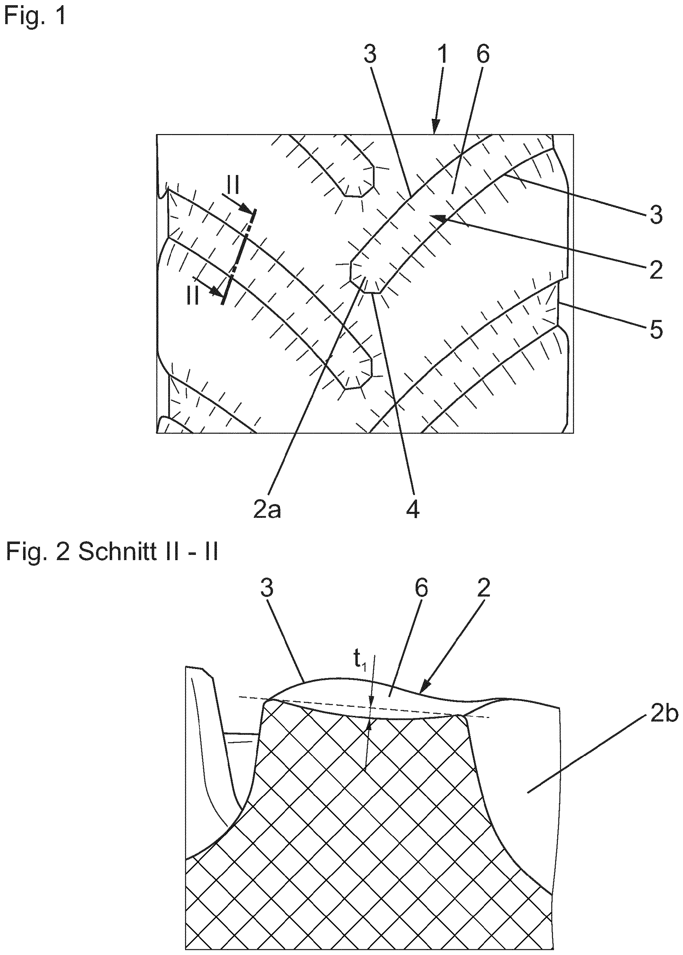

Fig. 1 zeigt einen Umfangsabschnitt eines Laufstreifens eines Reifens in Radialbauart, wie er typischerweise bei landwirtschaftlich genutzten Fahrzeugen, beispielsweise auf Ackerschleppern, Traktoren und ähnlichen Fahrzeugen, eingesetzt wird.

Der Laufstreifen 1 des Reifens besteht im Wesentlichen aus zwei Reihen von Stollen 2, wobei die eine Stollenreihe gegenüber der zweiten Stollenreihe in Umfangsrichtung versetzt ist. Die Stollen 2 in jeder Stollenreihe verlaufen im Wesentlichen parallel zueinander und erstrecken sich vom jeweiligen Laufstreifenrand bis in den Bereich des Reifenäquators. Auf diese Weise überlappen die im Bereich des Reifenäquators befindlichen Stollenköpfe 2a der Stollen 2 aus der einen Stollenreihe mit jenen der Stollen 2 aus der anderen Stollenreihe. Über die gesamte Breite des Laufstreifens 1 betrachtet ist der Verlauf der Stollen 2 in den beiden Stollenreihen derart, dass die Stollen 2 etwa V-förmig verlaufen. Der Verlauf der Stollen 2 und ihr gegenseitiger Abstand in jeder Stollenreihe entsprechen dem Stand der Technik, ebenso die Breite der Stollen 2 und ihre Höhe gegenüber der von Stollen 2 freien Bereichen im Laufstreifen 1.

Jeder Stollen 2 weist zwei Stollenflanken 2b (Fig. 2) und eine Oberfläche 6 auf, welche im Neuzustand des Reifens von zwei entlang der Längserstreckung des Stollens 2 vom Laufstreifenrand Richtung Laufstreifenmitte verlaufenden Randkanten 3, eine diese verbindende, den Stollenkopf 2a umrundenden Randkante 4 und einer diese laufstreifenrandseitig verbindende, im Wesentlichen in Umfangsrichtung verlaufenden Randkante 5 umlaufen ist. Die von den Randkanten 3, 4 und 5 umgebene Oberfläche 6 des Stollens 2 ist im Bereich zwischen den beiden entlang der Längserstreckung des Stollens 2 verlaufenden Randkanten 3 nach innen gewölbt. Die Wölbung ist über den überwiegenden Teil der Längserstreckung des Stollens 2, insbesondere über mindestens 80 % der Längserstreckung, als im Wesentlichen gleichmäßige und runde Wölbung ausgeführt, deren tiefste Stelle sich im Bereich der Stollenmitte befindet. An der tiefsten Stelle beträgt die Tiefe t₁ (Fig. 2) der nach innen gewölbten Oberfläche 6 gegenüber dem Niveau der Stollenkanten 3 0,5 mm bis 5,0 mm, vorzugsweise 2,0 mm bis 3,0 mm, wobei ein bevorzugter Wert für die Tiefe t₁ 2,5 mm ist. In Richtung zur Randkante 5 und in Richtung zu der den Stollenkopf 2a umlaufenden Randkante 4 läuft die Wölbung der Oberfläche 6 jeweils aus, sodass der Stollen 2 über seine Längserstreckung durch die Wölbung wannenartig ausgenommen ist.

Bei erfindungsgemäß ausgeführten Stollen 2 ist der Anpressdruck zum Untergrund im Bereich der die Stollen 2 umlaufenden Randkanten 3, 4 und 5 gegenüber herkömmlich ausgeführten Stollen etwas höher und in der Stollenmitte etwas geringer. Dies bewirkt ein geringeres Gleiten der Randkanten am Untergrund und ein stärkeres Gleiten in der Stollenmitte. Der Abrieb der Stollen 2 an ihren Randkanten wird somit verringert und insgesamt gleichmäßiger, was die Lebensdauer des Reifens verlängert.

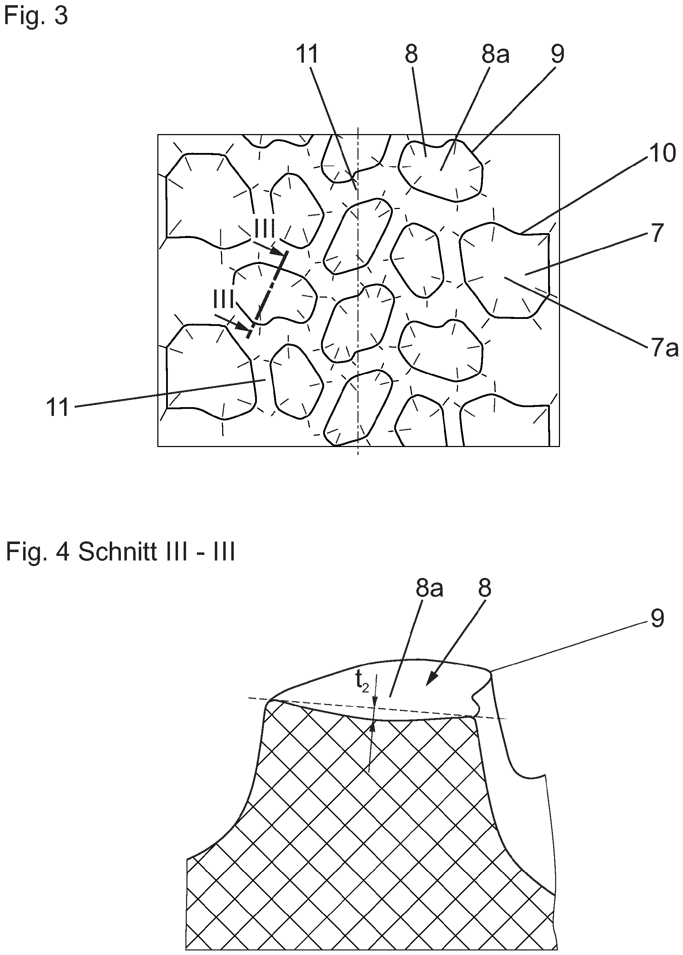

Fig. 3 zeigt einen Umfangsabschnitt eines ein Blockprofil aufweisenden Laufstreifens 1' eines Nutzfahrzeugreifens in Radialbauart, wie es typischerweise als Traktionsprofil auf Reifen vorgesehen wird, die auch offroad eingesetzt werden. Es handelt sich daher um Nutzfahrzeugreifen für Fahrzeuge, die auch auf unbefestigten Straßen bzw. unbefestigtem Untergrund fahren, wobei das Blockprofil eine gute Traktion auf matschigem Untergrund, auf Schnee oder Schneematsch sicherstellt. Zu solchen Fahrzeugen gehören beispielsweise Baustellenfahrzeuge oder in der Land- und Forstwirtschaft eingesetzte Fahrzeuge.

Wie in Fig. 3 gezeigt ist, weist ein derartiges Blockprofil typischerweise schulterseitig jeweils eine Reihe aus ausgeprägten und relativ großvolumigen Blöcken 7 auf, deren gegenseitiger Abstand in Umfangsrichtung des Laufstreifens im Wesentlichen der Umfangserstreckung der Blöcke 7 entspricht. Bei solchen Blockprofilen weisen ferner die im mittleren Bereich des Laufstreifens vorgesehenen, ebenfalls relativ großvolumigen Blöcke 8 geringere gegenseitige Abstände voneinander und zu den schulterseitigen Blöcken 7 auf, wobei zwischen den Blöcken 8 sowie diesen und den Blöcken 7 ausgeprägte Rillen 11 vorhanden sind. Beim gezeigten Ausführungsbeispiel verläuft entlang des Reifenäquators eine Reihe von Blöcken 8, ferner jeweils eine weitere Blockreihe zwischen dieser und den schulterseitigen Blockreihen. Die äußeren Konturen und die Anordnung der Blöcke 7, 8 sind nicht Gegenstand der Erfindung, diesbezüglich kann das Blockprofil gemäß dem bekannten Stand der Technik ausgeführt sein. Den Blöcken 7, 8 solcher Blockprofile ist gemeinsam, dass sie keine weiteren Strukturierungen, etwa Einschnitte oder dergleichen, aufweisen, sondern jeder Block 7, 8 eine durchgehende Oberfläche 7a, 8a aufweist. Die Oberflächen 7a, 8a sind daher auch jeweils von einer durchgehenden Randkante 9, 10 umlaufen.

Die Blockoberfläche 7a, 8a jedes Blockes 7, 8 ist gemäß der Erfindung nach innen gewölbt. Die Wölbung beginnt jeweils an der umlaufenden Randkante 9, 10 und erstreckt sich bis in den mittleren Bereich jedes Blockes 7, 8, wie es beispielsweise in Fig. 4 zu sehen ist. Im mittleren Bereich des jeweiligen Blockes 7, 8 bzw. im Bereich des Flächenschwerpunktes der Oberfläche 7a, 8a befindet sich auch die tiefste Stelle der Wölbung, wobei die Tiefe t₂ der nach innen gewölbten Oberfläche 7a, 8a gegenüber dem Niveau der umlaufenden Randkante 9, 10 0,5mm bis 5,0 mm, vorzugsweise 2,0 mm bis 3,0 mm beträgt. Ein bevorzugter Wert für die Tiefe t₂ ist in der Größenordnung von 2,5 mm. Analog zum ersten Ausführungsbeispiel verläuft daher die Wölbung der Oberfläche 7a, 8a bis zur umlaufenden Randkante 9, 10. Auch bei dieser Ausführungsvariante ist der Anpressdruck zum Untergrund an den die Blöcke 7, 8 umlaufenden Randkanten 9, 10 gegenüber herkömmlich ausgeführten Blöcken 7, 8 etwas höher und im Bereich der Blockmitte geringer. Analog zur ersten Ausführungsform ist dadurch im Bereich der Randkanten ein verringerter Abrieb und ferner ist insgesamt ein gleichmäßigerer Abrieb des Laufstreifens erzielbar, wodurch die Lebensdauer des Reifens verlängert ist.

## Patentansprüche

1. Nutzfahrzeugreifen in Radialbauart, insbesondere Landwirtschaftsreifen, mit einem Laufstreifen (1) mit einem Stollenprofil, bei welchem die Stollen (2) in zwei gegeneinander in Umfangsrichtung versetzten Stollenreihen angeordnet sind, wobei jeder Stollen (2) von zwei in der Richtung der Längserstreckung des Stollens (2) verlaufenden Randkanten (3), ferner von einer diese laufstreifenrandseitig und einer diese im Bereich der Laufstreifenmitte verbindenden Randkante (4, 5) umlaufen ist, und wobei die Stollen (2) jeweils eine durchgehende Oberfläche (6) aufweisen, welche durchgehend von den Randkanten (3, 4, 5) umlaufen ist,
wobei die Oberflächen (6) der Stollen (2) gegenüber dem Niveau der umlaufenden Randkanten (3, 4, 5) und von den Randkanten (3, 4, 5) ausgehend jeweils insgesamt nach innen gewölbt sind, wobei diese Wölbung der Oberflächen (6) der Stollen (2) über zumindest 80 % der Längserstreckung der Stollen (2) quer zu den in der Längserstreckung der Stollen (2) verlaufenden Randkanten (3) und zwischen diesen als Vertiefung ausgebildet ist,
**dadurch gekennzeichnet,**
**dass** die Randkanten (3, 4, 5) die einzigen Randkanten der Stollen (2) sind, und die größte Tiefe (t₁) der Wölbung gegenüber dem Niveau der umlaufenden Randkanten (3, 4, 5) 0,5 mm bis 5,0 mm, vorzugsweise 2,0 mm bis 3,0 mm, beträgt.

2. Nutzfahrzeugreifen nach einem der Anspruch 1, **dadurch gekennzeichnet, dass** die Wölbung im Wesentlichen symmetrisch zu der in der Längserstreckung verlaufenden Mittellinie der Oberfläche (6) des Stollens (2) ausgebildet ist.

3. Nutzfahrzeugreifen nach Anspruch 1 oder 2, **dadurch gekennzeichnet, dass** die Wölbung über ihre Erstreckung entlang des Stollens (2) eine im Wesentlichen konstante Rundung aufweist.

4. Nutzfahrzeugreifen nach einem der Ansprüche 1 bis 3, **dadurch gekennzeichnet, dass** die Wölbung in Richtung der die Oberfläche (6) des Stollens (2) stirnseitig begrenzenden Randkanten (4, 5) unter Abnahme ihrer Tiefe ausläuft.

## Claims

1. Commercial vehicle tyre of a radial type of construction, in particular an agricultural tyre, with a tread (1) with a lug profile, in which the lugs (2) are arranged in two rows of lugs offset with respect to one another in the circumferential direction, wherein each lug (2) is surrounded by two peripheral edges (3), running in the direction of the longitudinal extent of the lug (2), and also by a peripheral edge (4, 5) connecting them at the periphery of the tread and connecting them in the region of the middle of the tread, and wherein the lugs (2) each have a continuous surface (6), which is continuously surrounded by the peripheral edges (3, 4, 5), wherein the surfaces (6) of the lugs (2) are each curved inwardly overall with respect to the level of the surrounding peripheral edges (3, 4, 5) and proceeding from the peripheral edges (3, 4, 5), wherein this curvature of the surfaces (6) of the lugs (2) is formed as a depression over at least 80% of the longitudinal extent of the lugs (2) transversely in relation to the peripheral edges (3) running in the longitudinal extent of the lugs (2) and between them, **characterized in that** the peripheral edges (3, 4, 5) are the only peripheral edges of the lugs (2), and the greatest depth (t₁) of the curvature with respect to the level of the surrounding peripheral edges (3, 4, 5) is 0.5 mm to 5.0 mm, preferably 2.0 mm to 3.0 mm

2. Commercial vehicle tyre according to one of Claim 1, **characterized in that** the curvature is formed substantially symmetrically in relation to the centre line, running in the longitudinal extent, of the surface (6) of the lug (2).

3. Commercial vehicle tyre according to Claim 1 or 2, **characterized in that** the curvature has a substantially constant rounding over its extent along the lugs (3).

4. Commercial vehicle tyre according to one of Claims 1 to 3, **characterized in that** the curvature runs out with decreasing depth in the direction of the peripheral edges (4, 5) delimiting the surface (6) of the lugs (2) at the ends.

## Revendications

1. Pneumatique de véhicule utilitaire de construction radiale, en particulier pneu agricole, comprenant une bande de roulement (1) avec un profil à crampons, dans lequel les crampons (2) sont disposés dans deux rangées de crampons décalées l'une par rapport à l'autre dans la direction périphérique, chaque crampon (2) étant entouré par deux arêtes de bord (3) s'étendant dans la direction de l'étendue longitudinale du crampon (2) et par une arête de bord (4, 5) reliant celles-ci respectivement du côté du bord de la bande de roulement et dans la région du milieu de la bande de roulement, et les crampons (2) présentant chacun une surface continue (6) qui est entourée de manière continue par les arêtes de bord (3, 4, 5),
les surfaces (6) des crampons (2) étant dans chaque cas dans l'ensemble cintrées vers l'intérieur par rapport au niveau des arêtes de bord périphériques (3, 4, 5) et à partir des arêtes de bord (3, 4, 5), ce cintrage des surfaces (6) des crampons (2) étant réalisé sous forme de renfoncement sur au moins 80 % de l'étendue longitudinale des crampons (2) transversalement aux arêtes de bord (3) s'étendant dans la direction longitudinale des crampons (2) et entre celles-ci,
**caractérisé en ce que** les arêtes de bord (3, 4, 5) sont les seules arêtes de bord des crampons (2) et la plus grande profondeur (t₁) du cintrage par rapport au niveau des arêtes de bord périphérique (3, 4, 5) est de 0,5 mm à 5,0 mm, de préférence de 2,0 mm à 3,0 mm.

2. Pneumatique de véhicule utilitaire selon l'une de la revendication 1, **caractérisé en ce que** le cintrage est réalisé essentiellement symétriquement par rapport à l'axe médian de la surface (6) du crampon (2) s'étendant dans l'étendue longitudinale.

3. Pneumatique de véhicule utilitaire selon la revendication 1 ou 2, **caractérisé en ce que** le cintrage présente sur son étendue le long du crampon (2) un arrondi essentiellement constant.

4. Pneumatique de véhicule utilitaire selon l'une quelconque des revendications 1 à 3, **caractérisé en ce que** le cintrage se termine dans la direction des arêtes de bord (4, 5) limitant la surface (6) du crampon (2) du côté frontal avec diminution de sa profondeur.
